# EUROPÄISCHE PATENTSCHRIFT

(11) **EP 1 250 749 B1**
(45) Veröffentlichungstag und Bekanntmachung des Hinweises auf die Patenterteilung: **10.05.2006**
(21) Anmeldenummer: 00985198.1
(22) Anmeldetag: 19.12.2000
(51) Int. Cl.: H02P 1/40, H02P 1/28

(54) **ELEKTRISCHES SCHALTGERÄT**
ELECTRICAL SWITCHING DEVICE
APPAREIL DE COMMUTATION ELECTRIQUE

(30) Priorität: 28.01.2000 DE 10003692
(43) Veröffentlichungstag der Anmeldung: 23.10.2002
(73) Patentinhaber: Moeller GmbH, 53115 Bonn (DE)
(72) Erfinder: MAGYAR, Peter, 33813 Oerlinghausen (DE); GÜNZEL, Rainer, 53639 Königswinter (DE)
(86) Internationale Anmeldenummer: PCT/EP2000/012941
(87) Internationale Veröffentlichungsnummer: WO 2001/056143

(56) Entgegenhaltungen:
- DE-A- 2 516 693
- US-A- 4 996 469

## Beschreibung

Die Erfindung betrifft ein elektrisches Schaltgerät gemäß dem Oberbegriff des unabhängigen Anspruchs.

Es ist bekannt, daß die Einstellung bzw. Änderung des Betriebszustandes (Starten, Drehzahlstellen, Bremsen, Umkehren der Drehrichtung) eines Kurzschlußläufer-Asynchronmotors durch "Schalten" bzw. "Stellen" der Klemmenspannung möglich ist. Solche Geräte, die die genannte Spannungsänderung bei Beibehalten der Frequenz ermöglichen, können in die zwei Hauptgruppen Drehstromschalter und Drehstromsteller aufgeteilt werden. In beiden Fällen verursacht die Spannungsänderung eine Änderung der Drehzahl-Drehmoment-Kennlinie des Motors, was eine last- bzw. regelungsabhängige Änderung der Drehzahl bzw. des Drehmomentes zur Folge hat.

Derartige Schaltungen sind nach Stand der Technik auf Halbleiterbasis aufgebaut, wobei die Halbleiterschalter in jedem Phasenzweig eine bidirektionale Stromführung ermöglichen. Ein Vorteil der Halbleiterschalter besteht darin, daß der Zustand der Leistungsseite durch die Steuerung der Halbleiterschalter zwischen den Zuständen voll gesperrt und voll ausgesteuert leicht geändert werden kann. Geeignete Halbleiterschalter sind Thyristoren und Triacs. Aber auch andere Halbleiterbaulemente, z.B. Transistoren oder IGBT's eignen sich für einen derartigen Schaltungsaufbau.

Drehstromschalter beziehungsweise Drehstromsteller haben im Leistungsteil einen im wesentlichen identischen schaltungstechnischen Aufbau; der wesentliche Unterschied besteht in der Art der Zündsteuerung:

Die auf Halbleiterbasis aufgebauten Drehstromschalter (Halbleiter-Drehstromschalter) werden als elektronisch steuerbare Schalter eingesetzt. Die Ansteuerung verursacht ein unmittelbares volles Ein- bzw. Ausschalten. Das ist die sogenannte DOL-(direct on-line) Ansteuerung. Solche Geräte ersetzen also elektromechanische Schütze. Diese Geräte werden als Halbleiterschütze, Halbleiterschalter, elektronische Schalter oder dergleichen bezeichnet.
Die für die Drehrichtungsumkehr geeignete Version der Halbleiterschütze wird als Halbleiter-Drehstrom-Wendeschalter oder Halbleiter-Wendeschütz bezeichnet.

Die auf Halbleiterbasis aufgebauten Drehstromsteller (Halbleiter-Drehstromsteller) werden mit kontinuierlicher Zündsteuerung betrieben wobei die jeweilige Grenze der Zündsteuerung der volle ein- bzw. ausgeschaltete Zustand ist. Charakteristisch aber ist der Betrieb im Zwischenzustand (Stellerbetrieb).

Für die Anwendung in der Antriebstechnik können auf der Basis der kontinuierlichen Steuerbarkeit der Halbleiterbauelemente folgende zwei Gerätearten abgeleitet werden:
- Wird der Stellerbetrieb während der gesamten Betriebszeit erhalten, handelt es sich um einen Drehzahl- bzw. Drehmomentsteller (auch Halbleiter-Motorsteller genannt). Solche Geräte ermöglichen das kontinuierliche Stellen der Drehzahl bzw. des Drehmomentes des Motors zwischen dem Nennwert und Null.
- Wird dagegen kein kontinuierliches Stellen des Motorzustandes während der gesamten Betriebszeit gewünscht und die kontinuierliche Zündsteuerung nur für Vermeidung bzw. Verminderung der elektrischen und mechanischen Beanspruchungen beim Start, Abbremsen und Drehrichtungsumkehr benutzt, spricht man von Sanftstarter (auch genannt: Halbleiterstarter, Softstarter, Motorstarter, Sanftanläufer, Sanftausläufer, Sanftanlaufgerät, Sanftauslaufgerät usw.). Solche Geräte werden in dieser Beschreibung im weiteren als Halbleiter-Sanftstarter bezeichnet.

Der obige Überblick hat gezeigt, daß für die Lösung der Motorsteuerungsaufgaben
- sanfter Hoch- und Auslauf kombiniert mit
- sanfter Drehrichtungswende

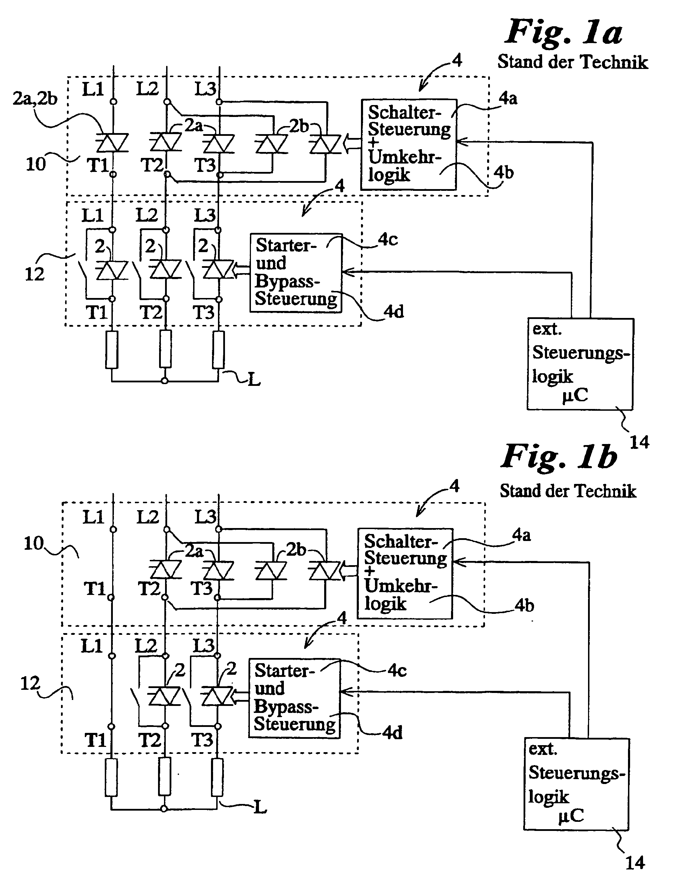

eine Motorsteuerung (Motor-Wendestarter) Verwendung findet, die nach dem Stand der Technik zwei oder drei Geräte erforderlich macht. Die kompakteste bekannte Ausführung besteht aus der Kombination von zwei Geräten: einem Halbleiter-Wendeschütz und einem Halbleiter-Sanftstarter (Fig. 1a, b ohne externe Steuerungslogik).

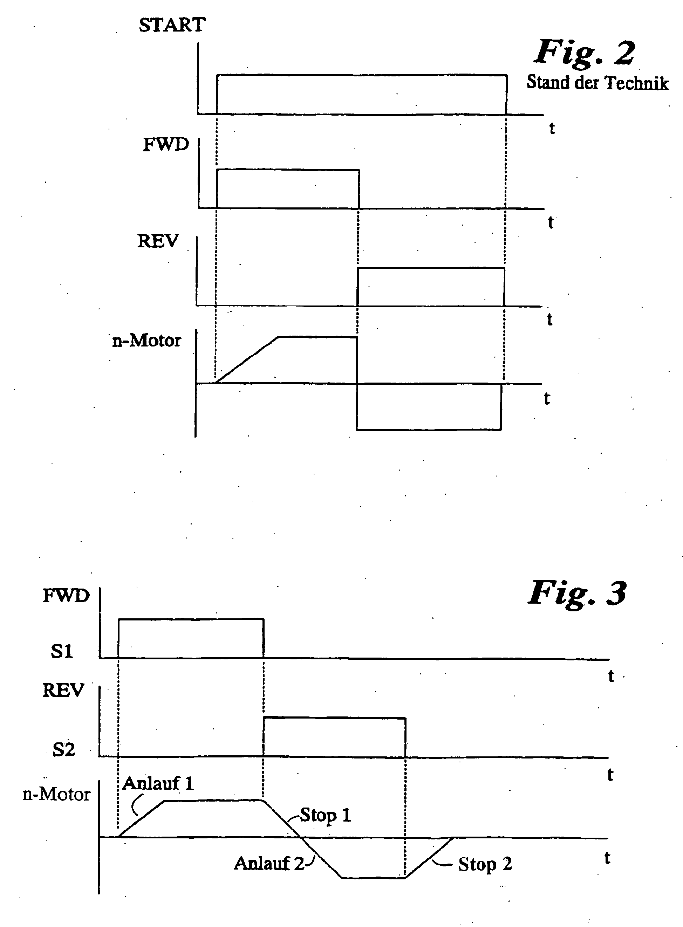

Fig. 1a, 1b zeigen eine Motor-Starter-Kombination mit Wendefunktion für den Sanftanlauf eines Drehstrommotors L. Diese Motorsteuerung wird mittels einer Serienschaltung bestehend aus einem Halbleiter-Wendeschütz und einem Halbleiter-Sanftstarter aufgebaut. Beide Geräte weisen in mindestens zwei von drei Phasen einen steuerbaren, bidirektional leitfähigen Halbleiterschalter auf. Den mit dieser Schaltungsanordnung realisierbaren Drehzahlverlauf und die zugehörigen Eingangssignale gibt Fig. 2 wieder. Hierbei ist nur ein sanfter Anlauf des zu steuemden Motors für eine Drehrichtung gewährleistet. Die Drehrichtungsumkehr wird ohne einen sanften Übergang (Sanftauslauf, emeuter Sanftstart) von einer Drehrichtung in die andere realisiert. Dies hat starke elektrische und mechanische Rückschläge und daraus resultierend eine verkürzte Lebensdauer der Betriebsmittel zur Folge.
Weiterhin sind auf diese Weise manche Applikationen gar nicht realisierbar.

Soll ein sanfter Übergang bei Drehrichtungsumkehr gewährleistet sein, wie etwa in Fig. 3 dargestellt, wird die Schaltung noch umfangreicher und aufwendiger. Hierfür wird neben der jeweiligen internen Steuerungslogik eine weitere, externe Steuerungslogik erforderlich, die Wendeschütz und Sanftstarter überwacht und bei An- und Umschaltvorgängen die interne Steuerungslogik entsprechend ansteuert (Fig. 1a, b mit externer Steuerungslogik).
Bei dieser Lösung sind die zwei wesentlichen Funktionen mit relativ hohem schaltungstechnischen Aufwand realisiert:
- es sind zwei Geräte (Halbleiter-Wendeschütz und Halbleiter-Sanftstarter) in Reihe geschaltet, wobei
- der Halbleiter-Wendeschütz das Netz mit dem Halbiefter-Sanftstarter, gesteuert durch seine Steuerungslogik verbindet, indem
   - der Ansteuerteil "Umkehrlogik" die anzusteuernde Gruppe der bidirektional leitfähigen Halbleiterschalter auswählt und
   - der Ansteuerteil "Schattersteuerung" die vorher erwähnte Gruppe der bidirektional leitfähigen Halbleiterschalter ein- und ausschaltet;
- der tiatbleiter-Sanftstarter mit Hilfe seiner Steuerungslogik einen sanften (rampenförmigen) Ein- und Ausschaltvorgang generiert, indem
   - der Ansteuerteil "Startersteuerung" die kontinuierliche Zündsteuerung der bidirektional leitfähigen Halbleiterschalter zwischen den Schaltzuständen voll Aus und voll Ein, bzw. voll Ein und voll Aus durchführt,
   - der Ansteuerteil "Bypasssteuerung" die optionalen Bypass-Schaltglieder
      - einschaltet, wenn eine Einschaltrampenende erreicht ist und
      - ausschaltet, bevor eine Ausschaltrampe angefangen wird.

DE 25 16 693 A offenbart ein Gerät mit den im Oberbegriff des Anspruch 1 definierten Merkmalen.

Der Erfindung liegt daher die Aufgabe zugrunde, einen Sanftstarter der eingangs beschriebenen Art zu schaffen, der mit deutlich reduziertem schaltungstechnischen Aufwand realisierbar ist.

Ausgehend von einem Schaltgerät der eingangs genannten Art wird die Aufgabe erfindungsgemäß durch die kennzeichnenden Merkmale des unabhängigen Anspruchs gelöst, während den abhängigen Ansprüchen vorteilhafte Weiterbildungen der Erfindung zu entnehmen sind.

Der erfindungsgemäße Sanftstarter wird auf der Basis eines Halbleiter-Wendeschützes realisiert. Im Gegensatz zum Stand der Technik, wo ein derartiger Sanftstarter durch die Verschaltung und getrennte Ansteuerung von Halbleiter-Wendeschütz und herkömmlichem Sanftstarter realisiert wird, wird gemäß der Erfindung nur eine Anordnung von Halbleiterschaltern gemäß dem Aufbau eines herkömmlichen Halbleiter-Wendeschützes benötigt und diese über Ansteuermittel angesteuert, die
- die Ansteuerung der gegenseitig verschalteten Halbleiterschalter mit Wirkung eines Phasentausches mindestens zweier entsprechend gegenseitig verschalteter Phasen bewirkt (Ansteuerleil "Umkehrlogik"),
- alle zu steuemden Phasenzweige derart steuert, dass ein Sanftstartsignal für die jeweils gewählte Drehrichtung generierbar ist (Ansteuerteil: "Startersteuerung") und
- bei einem Umschaltvorgang der Drehrichtung dem neuen Sanftstartsignal stets ein Sanftstopsignal vorgeschaltet ist (ebenfalls Teilbereich des Ansteuerteils: "Startersteuerung").

Hierbei ist die einfach aufgebaute Schaltungsanordnung gemäß einem Halbleiterwendeschütz mitsamt den Ansteuermitteln gemäß der Erfindung in einem gemeinsamen Schaltgerätegehäuse angeordnet. Die Ansteuermittel können entweder in klassischer Komponententechnik (als hardwaremäßig realisierte Schaltungsanordnung) oder in Form von eine Logikeinheit, wie Mikroprozessor, ansteuemder Software ausgeführt sein. Die auf diese Weise weiterentwickelte Wendeschützanordnung realisiert nunmehr sowohl die gesteuerte Phasenumkehr zur Drehrichtungsänderung des Drehstrommotors als auch die Sanftstartfunktion des separaten Sanftanlaufgerätes und die Funktionalität einer weiteren, Wendeschütz und Sanftstarter überwachenden und steuemden, Logikeinheit. Hierfür wird die herkömmliche Schaltersteuerung eines herkömmlichen Halbleiter-Wendeschützes durch eine neue Startersteuerung ersetzt.
Die herkömmliche Schaltersteuerung "Wendeschütz" steuert die durch die Umkehrlogik ausgewählte Halbleitergruppe DOL (direct on-line) vor dem Beginn einer Sanftstartrampe und nach Ablauf einer Sanftstoprampe aus (Zünden der Halbleiterschalter ohne Rampenfunktion).

Die bekannte Startersteuerung "Sanftstarter" stellt die Sanftstartrampe und die Sanftstoprampe durch die kontinuierliche Zündsteuerung seiner Halbleiterschalter ein. Hier werden immer drei (nach Fig1a) oder zwei (nach Fig1b) Halbleiterschalter entsprechend der durch das Wendeschütz bestimmten Phasenreihenfolge rampenförmig hoch- und runtergesteuert. Die neue Startersteuerung "Halbleiter-Wende-Sanftstarter" steuert die eine oder die andere der zwei Gruppen von Halbleiterschaltern entsprechend der gewünschten Phasenreihenfolge am Motor. Die ausgewählte Halbleiterschalter-Gruppe wird dann rampenförmig voll ein- und ausgeschaltet.

Die Aufgabe der Umkehrlogik ist sowohl in der alten (bekannten) als auch in der neuen (erfindungsgemäßen) Version identisch: eine Halbleiterschalter-Gruppe wird für die Rampensteuerung freigegeben, die andere Halbleiterschalter-Gruppe wird gesperrt.

Die Steuerung führt also in der alten und neuen Version eine Rampensteuerung durch, aber in der neuen Version wahlweise mit Hilfe der Halbleiterschalter-Gruppen. Die Freigabe- und Sperr-Funktion der Umkehrlogik entspricht dem DOL-Einschalten der einen oder anderen Halbleiterschalter-Gruppe; dazu werden aber bei der neuen Version die beiden Halbleiterschalter-Gruppen des Wendestarters nicht mehr benötigt).

Durch die erfindungsgemäße Ausführung ist anstelle von mindestens zwei oder drei Geräten mit eigenen Gehäusen, Bauteilen und Ansteuermitteln lediglich noch ein Gehäuse mit einem deutlich reduzierten Bauteilaufwand und einer deutlich vereinfachten Ansteuerung erforderlich. Zum Beispiel wird bei unmittelbarem Vergleich der Geräte nach dem Stand der Technik (Fig. 1a, b) mit dem Gerät gemäß der Erfindung deutlich, dass die Anzahl der benötigten Halbleiterschalter deutlich reduziert wird. Hierdurch wird wertvoller Einbauplatz gespart und die auftretende Verlustleistung erheblich reduziert. Darüber hinaus ist das erfindungsgemäße Gerät weniger störanfällig und erheblich preisgünstiger herstellbar.

In einer Weiterbildung der Erfindung weist die Schaltungsanordnung der Halbleiterschalter (Wendeschützanordnung) zusätzlich Bypass-Schaltglieder, insbesondere mechanisch ausgebildete Kontakte eines Relais oder Schütz, auf. Diese Bypass-Schaltglieder gewährleisten die Stromführung der einzelnen Phasen im voll durchgeschalteten Zustand der Halbleiterschalter. Dies reduziert in bekannter Weise die in den Halbleitern auftretende Verlustleistung und die damit eingehende Wärmeentwicklung. Um die Funktionalität der Bypass-Schaltglieder zu gewährleisten ist das Ansteuermittel (durch den Ansteuerteil "Bypasssteuerung") entsprechend erweitert.

Weitere Einzelheiten und Vorteile der Erfindung ergeben sich aus dem folgenden, anhand von Figuren erläuterten Ausführungsbeispiel. Es zeigen
- Figur 1a, b:: eine Halbleiter-Sanftstarter-Kombination mit Wendefunktion gemäß Stand der Technik (SdT);
- Figur 2:: die schematische Darstellung des Motordrehzahl-Signalverlaufs bei entsprechenden Eingangssignalen bei einer Schaltungsanordnung gemäß Fig.1a, b ohne externe Steuerungslogik;
- Figur 3:: gewünschter Signalverlauf der Motordrehzahl bei einer Schaltungsanordnung gemäß Fig. 1a, b mit externer Steuerungslogik oder bei einer Schaltungsanordnung gemäß der Erfindung;
- Figur 4a, b:: ein Halbleiter-Sanftstarter gemäß der Erfindung; und
- Figur 5:: eine mögliche Ausführungsform für einen Signalflußplan für die Arbeitsweise der erfindungsgemäßen Ansteuermittel.

Nach Fig. 1a, b besteht eine Halbleiter-Sanftstarter-Wendestarter-Kombination für einen dreiphasigen Drehstrommotor gemäß dem SdT aus einem Halbleiter-Wendeschütz 10 mit symmetrischer (Fig. 1a) oder asymmetrischer (Fig. 1b) Halbleiterschaltungsanordnung mit eigener Schaltersteuerung 4a und Umkehrlogik 4b und einem Halbleiter-Sanftstarter 12 mit eigener Starter- und Bypass-Steuerung 4c, 4d zur Generierung eines rampenförmigen Softstartsignals.

Dabei schaltet die Schaltersteuerung 4a die von der Umkehrlogik 4b ausgewählte, der gewünschten Phasenreihenfolge entsprechende Gruppe der bidirektional leitfähigen Halbleiterschalter 2a, 2a; 2b, 2b ein und aus.

Die Umkehrtogik 4b indes wählt, der Auswahl der gewünschten Phasenreihenfolge entsprechend, eine Gruppe der bidirektional leitfähigen Halbleiterschalter; sperrt die Ansteuerung der nichtleitenden Gruppe von Halbleiterschaltern 2a, 2a; 2b, 2b; sorgt für Erhaltung der Freiwerdezeit zwischen der Ansteuerung der beiden Gruppen und schaltet die andere Gruppe der bidirektional leitfähigen Halbleiterschalter 2b, 2b; 2a, 2a.

Die Startersteuerung 4c führt die kontinuierliche Zündsteuerung der bidirektional leitfähigen Halbleiterschalter 2a, 2b des Sanftstarters zwischen den Schaltzuständen voll Aus und voll Ein (bei Startrampe), bzw. zwischen voll Ein und voll Aus (bei Stoprampe) durch.

Die Bypasssteuerung 4d bewirkt die Schließung der Bypass-Schaltglieder 6 der Halbleiterschalter 2a, 2b für den Dauerbetrieb. Das heißt, dass nach erfolgter Anlaufphase des Motors L der Versorgungsstrom für den Motor L von den stromführenden Halbleiterschaltern 2 auf die Bypass-Schaltglieder 6 verlagert wird. Hierfür wird in bekannter Weise das jeweilige parallelgeschaltete Bypass-Schaltglied 6 geschlossen wenn das Ende der Softstartrampe erreicht ist und wird geöffnet, bevor eine Softstoprampe angefangen wird. Während des Dauerbetriebs sind die Halbleiterschalter 2 weiterhin dauerhaft angesteuert; sie führen keinen Strom, aber bei einer Öffnung der Bypass-Schaltglieder 6 können sie die Stromführung sofort übemehmen und dadurch eine eventuelle Zerstörung der Betriebsmittel verhindern.

Den Verlauf der Motordrehzahl des zu steuernden Motors zeigt Fig. 2. Hierbei wird bei anliegendem Richtungssignal (FWD, REV) für die gewünschte Drehrichtung (hier z.B. "FWD" für forward) und freigeschaltetem Startsignal der zu betreibende Drehstrommotor L per rampenförmigem Sanftanlauf (Anlauf1) langsam und stetig auf Nenndrehzahl hochgefahren. Bei Umschaltung der Drehrichtung mit Mitteln gemäß dem Stand der Technik wird der zu betreibende Motor L ohne Übergangsphase (Sanftauslauf und/oder erneuter Sanftanlauf) mit einem gegensätzlichen Signal beaufschlagt. Dies hat sehr starke elektrische und mechanische Belastungen und damit einen erhöhten Maschinenverschleiß zur Folge.

Um diese übergangslose Umschaltung zu vermeiden, muß die aus Wendeschütz 10 und Sanftstarter 12 bestehende Schaltungsanordnung durch eine zusätzliche externe Steuerungslogik 14 ergänzt werden. Erst dann kann ein Motordrehzahlverlauf gemäß Fig. 3 erreicht werden.
Um eine solche Steuerung zu realisieren, gibt es zwei Möglichkeiten. Es muß entweder ein Signal vom Softstarter ausgewertet werden, das das Softstop-Rampenende signalisiert oder über ein Zeitrelais die Dauer der SoftstopRampe überbrückt werden. Das Signal aus dem Softstarter ist in der Regel nur bei aufwendigen Softstartem verfügbar (Run-Signal, Not-in-Ramp-Signal, Drehzahl-null-Signal o.ä.), hat aber den Vorteil unabhängig von der Rampenzeit zu sein. Wird die Rampenzeit verändert, folgt eine solche Meldung automatisch den aktuellen Softstartereinstellungen. Die Meldung über ein Zeitrelais ist für alle Geräte realisierbar, ist jedoch von der Rampenzeit-Einstellung abhängig. Wird die Rampenzeit geändert, muß auch das Zeitrelais nachgeführt werden.

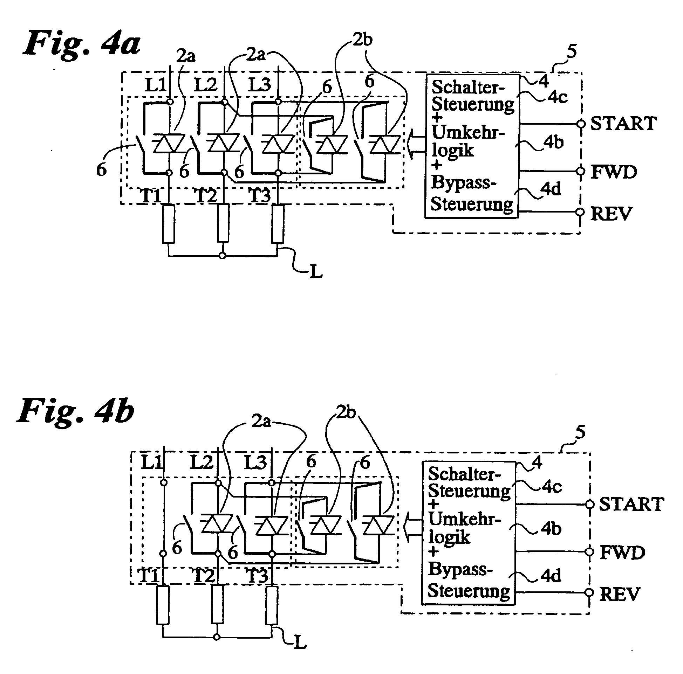

Um den gewünschten Drehzahlverlauf gemäß Fig. 3 zu erreichen wird gemäß der Erfindung eine Schaltungsanordnung gemäß Fig. 4a, b vorgeschlagen. Die erfindungsgemäße Schaltungsanordnung ist einmal zweiphasig (Fig. 4b/asymmetrischer Aufbau) und einmal dreiphasig (Fig. 4a/symmetrischer Aufbau) gesteuert dargestellt. Zur Beschreibung des erfindungsgemäßen Aufbaus soll die ausführliche Beschreibung der Schaltungsanordnung gemäß Fig. 4b genügen.
Fig. 4b zeigt einen Halbleiter-Sanftstarter mit Wendefunktion (für Sanftstart, Sanftstop, sowie für eine sanfte Drehrichtungsumkehr des Motors) zur Ansteuerung eines mehrphasigen Drehstrommotors L. Der erfindungsgemäße Sanftstarter umfaßt in mindestens zwei Phasenzweigen L2-T2, L3-T3 einen steuerbaren, bidirektional leitfähigen Halbleiterschalter 2a. Dabei sind zwei der steuerbaren Halbleiterschalter 2a gegenseitig jeweils derart verschaltet, dass ihre Eingänge L2, L3 über jeweils einen weiteren steuerbaren Halbleiterschalter 2b mit dem Ausgang T3, T2 der anderen Halbleiterschaltung 2a verbunden sind. Zur Ansteuerung der gegenseitig verschalteten steuerbaren Halbleiterschalter 2a, 2b dienen Ansteuermittel 4; 4b, 4c, 4d derart wirkend, dass der Eingang L2; L3 der einen Phase L2-T2, L3-T3 mit dem Ausgang T3; T2 der anderen Phase L3-T3 verbindbar ist. Bis hier beschreibt die erfindungsgemäße Anordnung ein herkömmliches Halbleiter-Wendeschütz.
Darüber hinaus ist das Ansteuermittel 4, 4b, 4c, 4d derart ausgebildet, dass auch die Ansteuerung (insbesondere die Phasenanschnittssteuerung) der Halbleiterschalter 2a, 2b aller Phasenzweige L1-T1, L2-T2, L3-T3 gewährleistet ist. Femer überwacht und steuert die Ansteuerung 4; 4b, 4c, 4d die Schaltungsanordnung wobei initiiert durch ein erstes Eingangssignal S1 für die erste Drehrichtung FWD ausgangsseitig ein Sanftstartsignal (Anlauf1) generierbar ist, initiiert durch ein zweites Eingangssignal S2 für die zweite Drehrichtung REV ausgangsseitig ein weiteres Sanftstartsignal (Anlauf2) generierbar ist und durch einen Umschaltvorgang von dem einen Eingangssignal S1; S2 auf das andere Eingangssignal S2; S1 ausgangsseitig ein Sanftstopsignal (Stop1, Stop2) generierbar ist derart, dass einem durch den Umschaltvorgang initiierten Sanftstartsignal (Anlauf1, Anlauf2) stets ein Sanftstopsignal (STOP1, Stop2) vorausgeht. Wie Fig. 3 veranschaulicht sind auf diese Weise nahtlose beziehungsweise stetige Drehrichtungsübergänge realisierbar. Der Übergang erfolgt unterbrechungsfrei.
Wie in Fig. 4a und 4b dargestellt wird die Schaltungsanordnung bevorzugt mit Bypass-Schaltgliedem 6 ausgeführt. Hierfür ist vorzugsweise jedem der Halbleiterschalter 2a, 2b ein Schaltkontakt, insbesondere ein Relais- oder Schützkontakt, parallelgeschaltet. Bei dieser Ausführungsform ist das Ansteuermittel 4 um einen Funktionsteil (Bypasssteuerung 4d) für die Überwachung und Schaltung der Bypass-Schaltglieder 6 erweitert.

Gemäß der Erfindung sind alle Komponenten, die Halbleiterschalter 2a, 2b und Ansteuermittel 4 in einem gemeinsamen Schaltgerätegehäuse 5 angeordnet. Somit ist eine kompakte Schaltungsanordnung hoher Funktionalität mit einfachsten Mitteln geschaffen.

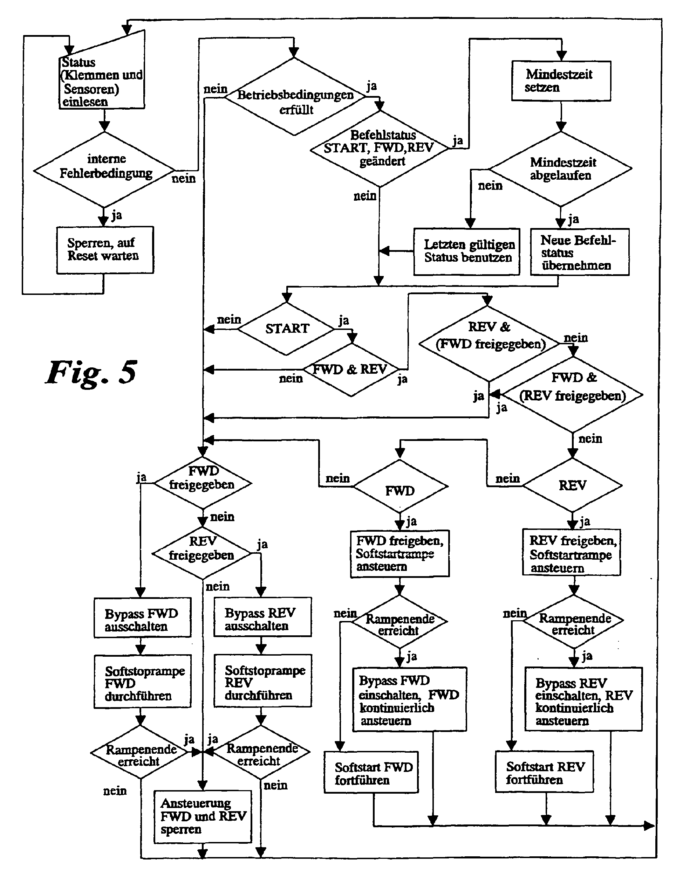

Fig. 5 zeigt eine mögliche Ausführungsform eines Signalflußplans der die Arbeitsweise der (des) Ansteuermittel(s) 4; 4b, 4c, 4d veranschaulicht.

Wird in einer einleitenden Prüfroutine kein Fehler erkannt, wird das Eingangssignal der Eingangsklemmen (FWD; REV; START) eingelesen.
Liegt ein Fehlersignal vor, geht das Gerät - in Abhängigkeit von der Art des Fehlers - in einen Sperrzustand über oder leitet einen Softstop ein, und gibt optional eine Fehlermeldung aus.

In einem zweiten Schritt werden Betriebsbedingungen (z.B. Übertemperatur, Phasenausfall usw.) abgefragt. Werden diese nicht erfüllt, muß ein Softstop eingeführt werden. Bei Prozess- oder Stromversorgungsfehlem sollte in den Sperrzustand übergegangen werden, bei fehlerhaften Betriebsbedingungen wie Übertemperatur, Phasenausfall oder dergleichen ist die Einleitung eines Softstops sinnvoll.

In einem dritten Schritt wird geprüft, ob sich der Befehlstatus geändert hat. Wenn dies der Fall ist, wird der neue Status nur nach einer Mindestzeit (verursacht durch Berücksichtigung der Prellzeiten, durch Vermeiden eines unnötigen Schaltvorganges wegen kurzer fehlerhafter Steuerbefehle START, REV, FWD usw.) anerkannt.

Im weiteren wird geprüft, ob ein Laufen des Motors möglich ist (Statussignal START vorliegt), weiterhin ob ein sinvoller Drehrichtungsbefehl vorliegt (dh. die Befehle FWD und REV nicht gleichzeitig anliegen). Es muß noch geprüft werden, ob die vorliegenden gültigen Befehle FWD, REV und die möglichen Leitzustände der Halbleiter (FWD freigegeben, REV freigegeben) übereinstimmen. Die Ergebnisse dieser Abfragen entscheiden, ob eine Softstop- oder eine Softstartrampe eingeleitet werden oder der zuvor eingeleitete Vorgang weitergeführt werden muß.

Beim Einleiten einer Softstoprampe muß zuerst geprüft werden, bei welcher Halbleitergruppe 2a oder 2b (entsprechend den Leitzuständen "FWD freigegeben", "REV freigegeben") dies ausgeführt werden soll. Beim Erreichen des Rampenendes wird die Ansteuerung der Halbleiter gesperrt und in Abhängigkeit von dem gültigen Status (FWD und REV) dieser Zustand beibehalten oder durch Einführung einer neuen Softstartrampe ein Drehrichtungswechsel durchgeführt.

Liegt kein Stopbefehl oder Drehrichtungswechsel vor, wird die zuvor eingestellte Drehrichtung beibehalten und abgefragt, ob das Rampenende der Sanftanlaufphase erreicht ist. Ist das der Fall, werden die Bypass-Schaltglieder 6 aktiv geschaltet und der gesamte Prozeß beginnt von vom. Ist das Rampenende nicht erreicht, wird die Rampe weiter fortgeführt.
Liegt ein Drehrichtungswechsel vor, wird das Softstopsignal generiert, die Bypass-Schaltglieder 6 abgeschaltet und das Softstopsignal bis zur vollständigen, abschließenden Ausführung des Softstopsignals zu Ende geführt. Im Anschluß daran wird der gesamte Prozeß neu eingeleitet.

Von Vorteil ist, dass zu jedem Zeitpunkt zu dem ein Drehrichtungsbefehl gegeben ist, unbedingt aber vor Anlauf des Motors L in die andere Drehrichtung, der Motor L erst einmal definiert per Softstopsignal in seiner Drehzahl heruntergeführt und erst dann ein Softstartsignal für die andere Drehrichtung ausführbar ist.

## Patentansprüche

1. Elektrisches Schaltgerät mit Ansteuermitteln (4) und mit über diese ansteuerbaren Halbleker-Schaltmitteln (2a, 2b) zum Sanftstarten, zum Sanftstoppen und zur Drehrichtungsumkehr eines mehrphasigen Drehstrommotors (L), wobei zusätzlich zu den ersten Schaltmittel (2a) zweier Phasenzweige (L2-T2, L3-T3) weitere Schaltmittel (2b) vorgesehen sind, welche den jeweiligen Eingang (L2; L3) mit dem jeweils anderen Ausgang (T3; T2) dieser Phasenzweige (L2-T2, L3-T3) verbinden, und bei Drehrichtungsumkehr ein Sanftstoppen aus der bisherigen Drehrichtung und ein nachfolgendes Sanftstarten in die neue Drehrichtung erfolgt, **dadurch gekennzeichnet, dass** jedem der Halbleiter-Schaltmittel (2a, 2b) ein über die Ansteuermittel steuerbares mechanisches Bypass-Schaltglied (6) parallel geschaltet ist, das die Stromführung in dem jeweiligen Phasenzweig (L2-T2, L3-T3) nach Ablauf des Sanftstartens übernimmt und vor Beginn des Sanftstoppens an das jeweilige Schaltmittel (2a; 2b) übergibt, und dass die Schaltmittel (2a, 2b), die Ansteuermittel (4) und die Bypass-Schaltglieder (6) in einem einzigen Gehäuse (5) angeordnet sind.

2. Elektrisches Schaltgerät nach vorstehendem Anspruch, **dadurch gekennzeichnet, dass** die Schaltmittel (2a, 2b) als bidirektional leitfähige Halbleiterschalter ausgebildet sind.

3. Elektrisches Schaltgerät nach einem der vorstehenden Ansprüche, **dadurch gekennzeichnet, dass** die Ansteuermittel (4) derart ausgebildet sind, dass
- initiiert durch ein erstes Eingangssignal (S1) für die erste Drehrichtung ausgangsseitig ein erstes Sanftstartsignal (Anlauf1) generierbar ist,
- initiiert durch ein zweites Eingangssignal (S2) für die zweite Drehrichtung ausgangsseitig ein zweites Sanftstartsignal (Anlauf2) generierbar ist und
- durch einen Umschaltvorgang von dem einem Eingangssignal (S1; S2) auf das andere Eingangssignal (S2; S1) ausgangsseitig ein Sanftstopsignal (Stop1; Stop2) generierbar ist derart, dass einem durch den Umschaltvorgang initiierten Sanftanlaufsignal (Anlauf1; Anlauf2) stets ein Sanftstopsignal (Stop1; Stop2) vorausgeht.

4. Elektrisches Schaltgerät nach einem der vorstehenden Ansprüche, **dadurch gekennzeichnet, dass** der Umschaltvorgang unterbrechungsfrei erfolgt.

## Claims

1. Electrical switching device with drive means (4) and with semiconductor switching means (2a, 2b) which can be driven via these drive means (4), for soft starting, for soft stopping and for reversing the rotation direction of a polyphase three-phase motor (L), with further switching means (2b) being provided in addition to the first switching means (2a) for two phase branches (L2-T2, L3-T3), which further switching means (2b) connect the respective input (L2; L3) to the respective other output (T3; T2) of these phase branches (L2-T2, L3-T3) and, during rotation direction reversal, soft stopping is carried out from the previous rotation direction followed by soft starting in the new rotation direction, **characterized in that** each of the semiconductor switching means (2a, 2b) is connected in parallel with a mechanical bypass switching element (6) which can be controlled via the drive means, supplies the electric current in the respective phase branch (L2-T2, L3-T3) after the soft starting process has been completed and transfers this to the respective switching means (2a; 2b) before the start of soft stopping, and **in that** the switching means (2a, 2b), the drive means (4) and the bypass switching element (6) are arranged in a single enclosure (5).

2. Electrical switching device according to the preceding claim, **characterized in that** the switching means (2a, 2b) are in the form of semiconductor switches which conduct in both directions.

3. Electrical switching device according to one of the preceding claims, **characterized in that** the drive means (4) are designed such that
- initiated by a first input signal (S1) for the first rotation direction, a first soft starting signal (Start1) can be generated on the output side,
- initiated by a second input signal (S2) for the second rotation direction, a second soft starting signal (Start2) can be generated on the output side, and
- a soft stopping signal (Stop1; Stop2) can be generated on the output side as a result of a switching process from the first input signal (S1; S2) to the other input signal (S2; S1) in such a way that a soft starting signal (Start1; Start2) which is initiated by the switching process always precedes a soft stopping signal (Stop1; Stop2).

4. Electrical switching device according to one of the preceding claims, **characterized in that** the switching process takes place without any interruption.

## Revendications

1. Appareil de commutation électrique comprenant des moyens de commande (4) et des moyens de commutation à semiconducteur (2a, 2b) commandables par le biais de ceux-ci pour démarrer en douceur, pour arrêter en douceur et pour changer le sens de rotation d'un moteur triphasé (L) à plusieurs phases, des moyens de commutation supplémentaires (2b) étant prévus en plus des premiers moyens de commutation (2a) des deux branches de phase (L2-T2, L3-T3), lesquels relient l'entrée (L2 ; L3) correspondante avec à chaque fois l'autre sortie (T3 ; T2) de ces branches de phase (L2-T2, L3-T3), et en cas de changement de sens de rotation il se produit un arrêt en douceur du sens de rotation actuel et ensuite un démarrage en douceur dans le nouveau sens de rotation, **caractérisé en ce que** chaque moyen de commutation à semiconducteur (2a, 2b) est branché en parallèle avec un élément de commutation de dérivation (6) mécanique commandable par le biais des moyens de commande, lequel prend en charge le passage du courant dans la branche de phase correspondante (L2-T2, L3-T3) après écoulement du démarrage en douceur et le transmet au moyen de commutation correspondant (2a ; 2b) avant le début de l'arrêt en douceur, et que les moyens de commutation (2a, 2b), les moyens de commande (4) et l'élément de commutation de dérivation (6) sont disposés dans un seul boîtier (5).

2. Appareil de commutation électrique selon la revendication précédente, **caractérisé en ce que** les moyens de commutation (2a, 2b) sont réalisés sous la forme de commutateurs à semiconducteur conducteurs dans les deux sens.

3. Appareil de commutation électrique selon l'une des revendications précédentes, **caractérisé en ce que** les moyens de commande (4) sont configurés de telle sorte que
- un premier signal de démarrage en douceur (démarrage 1) peut être généré du côté de la sortie, initié par un premier signal d'entrée (S1) pour le premier sens de rotation,
- un deuxième signal de démarrage en douceur (démarrage 2) peut être généré du côté de la sortie, initié par un deuxième signal d'entrée (S2) pour le deuxième sens de rotation,
- un signal d'arrêt en douceur (arrêt 1 ; arrêt 2) peut être généré du côté de la sortie par une opération de permutation d'un signal d'entrée (S1 ; S2) vers l'autre signal d'entrée (S2 ; S1) de manière à ce que le signal de démarrage en douceur (Démarrage 1 ; démarrage 2) initié par l'opération de permutation précède toujours un signal d'arrêt en douceur (arrêt 1 ; arrêt 2).

4. Appareil de commutation électrique selon l'une des revendications précédentes, **caractérisé en ce que** l'opération de permutation s'effectue sans interruption.
